# EUROPEAN PATENT APPLICATION

(11) **EP 4 811 680 A1**
(43) Date of publication of application: **23.09.2026**
(21) Application number: 24902794.7
(22) Date of filing: 10.12.2024
(51) Int. Cl.: H04B 10/11

(54) **COMMUNICATION APPARATUS AND COMMUNICATION METHOD**

(30) Priority: 13.12.2023 CN 202311727509
(71) Applicant: Huawei Technologies Co., Ltd., Shenzhen, Guangdong 518129 (CN)
(72) Inventor: CAI, Meng, Shenzhen, Guangdong 518129 (CN); YANG, Ning, Shenzhen, Guangdong 518129 (CN)
(74) Representative: MERH-IP Matias Erny Reichl Hoffmann Patentanwälte PartG mbB
(86) International application number: PCT/CN2024/138113
(87) International publication number: WO 2025/124373

(57) **Abstract**

This application relates to the communication field, and provides a communication apparatus and a communication method, to help reduce impact of different levels of atmospheric turbulence intensity on performance of the communication apparatus, and help maintain performance stability of the communication apparatus. The communication apparatus includes an optical receiving module, a first optical transmission module, a second optical transmission module, and a control module. The optical receiving module is configured to receive an optical signal, the first optical transmission module is configured to perform multi-mode transmission on the optical signal from the optical receiving module, and the second optical transmission module is configured to perform single-mode transmission on the optical signal from the optical receiving module. The control module is configured to: when a target parameter meets a first condition, control the optical signal from the optical receiving module to be input into the first optical transmission module, or when the target parameter meets a second condition, control the optical signal from the optical receiving module to be input into the second optical transmission module, where the target parameter includes a parameter related to atmospheric turbulence, and atmospheric turbulence intensity in the first condition is greater than atmospheric turbulence intensity in the second condition.

## Description

This application claims priority to Chinese Patent Application No. 202311727509.1, filed with the China National Intellectual Property Administration on December 13, 2023 and entitled "COMMUNICATION APPARATUS AND COMMUNICATION METHOD", which is incorporated herein by reference in its entirety.

### TECHNICAL FIELD

This application relates to the communication field, and in particular, to a communication apparatus and a communication method.

### BACKGROUND

With the development of various network applications such as big data, cloud computing, and the internet of things, requirements for network communication bandwidth are increasing, especially requirements for mobile wireless communication bandwidth, which are growing explosively. Free space optical (free space optical, FSO) communication, as a new wireless communication manner, integrates advantages of fiber communication and microwave communication, and has advantages such as large capacity, license-free, small size, and anti-interference, thus meeting wireless communication requirements, and gaining extensive research and application.

However, performance of an FSO system is affected by a propagation medium. An optical signal passing through an atmospheric channel may suffer from an attenuation effect caused by gas molecules and aerosol particles such as clouds and fog in the atmosphere, as well as a scintillation effect caused by atmospheric turbulence, resulting in amplitude and phase fluctuation of the optical signal. Existing FSO apparatuses have simple structures, and exhibit unstable performance under varying degrees of amplitude and phase fluctuation of the optical signal.

### SUMMARY

This application provides a communication apparatus and a communication method. Both a first optical transmission module and a second optical transmission module are disposed in the communication apparatus. Because the first optical transmission module and the second optical transmission module have different transmission modes, communication links respectively formed based on the first optical transmission module and the second optical transmission module have different performance and sensitivity. In this way, a corresponding communication link may be selected based on a change of a target parameter in different atmospheric turbulence conditions or different weather conditions. This helps reduce impact of different atmospheric turbulence conditions or different weather conditions on performance of the communication apparatus, and helps maintain performance stability of the communication apparatus.

According to a first aspect, this application provides a communication apparatus. The communication apparatus includes an optical receiving module, a first optical transmission module, a second optical transmission module, and a control module. The optical receiving module is configured to receive an optical signal, the first optical transmission module is configured to perform multi-mode transmission on the optical signal from the optical receiving module, and the second optical transmission module is configured to perform single-mode transmission on the optical signal from the optical receiving module. The control module is configured to: when a target parameter meets a first condition, control the optical signal from the optical receiving module to be input into the first optical transmission module, or when the target parameter meets a second condition, control the optical signal from the optical receiving module to be input into the second optical transmission module, where the target parameter includes a parameter related to atmospheric turbulence, and atmospheric turbulence intensity in the first condition is greater than atmospheric turbulence intensity in the second condition.

In a possible implementation, the optical signal received by the optical receiving module is transmitted through free space (which may also be referred to as a spatial optical link, an atmospheric channel, or the like), and the free space is affected by atmospheric turbulence and weather conditions, causing interference to optical signal transmission. For example, in a case of sunny, cloudy, or light rain, atmospheric turbulence is strong. Under impact of the atmospheric turbulence, a single-mode optical signal emitted by a transmit end may be converted into a multi-mode optical signal, making it difficult to receive the optical signal. In a case of heavy rain or torrential rain, although atmospheric turbulence is weak and a mode count of the optical signal received by a receive end may be less than that in a case of strong turbulence, rainfall may cause severe attenuation of optical signal power, which poses a challenge to maintenance of a communication link.

In this embodiment of this application, the control module may control, based on a change of the target parameter, the optical signal to enter the first optical transmission module or the second optical transmission module, and the target parameter is the parameter related to atmospheric turbulence. When the target parameter meets the first condition (which may be understood as a strong turbulence condition), the control module controls the optical signal to be input into the first optical transmission module. The first optical transmission module may implement multi-mode transmission of the optical signal, and may transmit optical signals in a plurality of modes. The optical signals in the plurality of modes generated under the strong turbulence condition help improve a rate of receiving the optical signal by the communication apparatus and improve optical coupling efficiency. When the target parameter meets the second condition (which may be understood as a weak turbulence condition), the control module controls the optical signal to be input into the second optical transmission module. The second optical transmission module may implement single-mode transmission of the optical signal. Because sensitivity of a transmission link based on the second optical transmission module is lower than that of a transmission link based on the first transmission module, an optical signal with low power may be received. In a condition of weak turbulence and heavy rainfall, optical signal power is low due to severe link attenuation, and transmitting the optical signal via the second transmission module helps maintain the communication link. In addition, because single-mode transmission has only one mode, which has an anti-interference capability, signal quality can be further maintained, and system performance can be ensured.

In this embodiment of this application, both the first optical transmission module and the second optical transmission module are disposed in the communication apparatus. Because the first optical transmission module and the second optical transmission module have different transmission modes, communication links respectively formed based on the first optical transmission module and the second optical transmission module have different performance and sensitivity. In this way, a communication link with better performance may be selected based on the change of the target parameter in different atmospheric turbulence conditions or different weather conditions. This helps reduce impact of different atmospheric turbulence conditions or different weather conditions on performance of the communication apparatus, and helps maintain performance stability of the communication apparatus.

With reference to the first aspect, in some implementations of the first aspect, the target parameter includes one or more of the following: optical power statistics corresponding to the optical signal in a preset time period, environmental precipitation, or an environment image.

It should be understood that the optical power statistics corresponding to the optical signal in the preset time period, the environmental precipitation, or the environment image may be understood as different parameters for describing atmospheric turbulence intensity. These parameters may be independently used to evaluate the atmospheric turbulence intensity, or one or more of these parameters may be combined for evaluation. This is not limited in this application.

With reference to the first aspect, in some implementations of the first aspect, when the target parameter includes the optical power statistics corresponding to the optical signal in the preset time period, the first condition includes that the optical power statistics corresponding to the optical signal in the preset time period conform to a first mathematical distribution, and the second condition includes that the optical power statistics corresponding to the optical signal in the preset time period meet a second mathematical distribution.

In this embodiment of this application, the optical power statistics corresponding to the optical signal in the preset time period are computed, so that the control module can control, when the optical power statistics corresponding to the optical signal in the preset time period conform to the first mathematical distribution, the optical signal from the optical receiving module to be input into the first optical transmission module for multi-mode transmission, or control, when the optical power statistics corresponding to the optical signal in the preset time period meet the second mathematical distribution, the optical signal from the optical receiving module to be input into the second optical transmission module for single-mode transmission. In this way, the communication apparatus provided in this embodiment of this application can select different transmission modes in different turbulence conditions. This helps maintain performance stability of the communication apparatus.

With reference to the first aspect, in some implementations of the first aspect, when the target parameter includes the environmental precipitation, the first condition includes that the environmental precipitation is less than or equal to a third threshold, and the second condition includes that the environmental precipitation is greater than or equal to a fourth threshold, where the third threshold is less than or equal to the fourth threshold.

It should be understood that the atmospheric turbulence is related to thermal effects caused by air density differences and temperature variations. Therefore, the atmospheric turbulence intensity is closely related to weather conditions. For example, when the environmental precipitation is less than or equal to the third threshold, the environment may be considered as a strong turbulence environment; and when the environmental precipitation is greater than or equal to the fourth threshold, the environment may be considered as a weak turbulence environment. However, this is not limited in this application.

Optionally, the third threshold may be 10 millimeters per day, and the fourth threshold may be 50 millimeters per hour. However, this is not specifically limited in this application.

In this embodiment of this application, the environmental precipitation is used as the target parameter, so that the control module can control, when determining that the environmental precipitation is less than or equal to the third threshold, the optical signal from the optical receiving module to be input into the first optical transmission module, or control, when determining that the environmental precipitation is greater than or equal to the fourth threshold, the optical signal from the optical receiving module to be input into the second optical transmission module. Because the atmospheric turbulence intensity is closely related to the weather conditions, in the method provided in this application, on one hand, the communication apparatus can select different transmission modes in different turbulence conditions, which helps maintain performance stability of the communication apparatus; and on the other hand, the manner of measuring the environmental precipitation via a rainfall detection module is convenient and direct, which helps improve efficiency of the control module and further improve performance of a communication system.

With reference to the first aspect, in some implementations of the first aspect, the communication apparatus further includes the rainfall detection module. The rainfall detection module is configured to measure the environmental precipitation and transmit the environmental precipitation to the control module.

Optionally, the rainfall detection module may be any device or component that can measure the environmental precipitation, for example, a rain gauge, a rain meter, or a sensor configured to measure a rainfall amount. This is not specifically limited in this application.

With reference to the first aspect, in some implementations of the first aspect, when the target parameter includes the environment image, the first condition includes that a recognition result of the environment image is sunny, cloudy, or light rain, and the second condition includes that the recognition result of the environment image is heavy rain or torrential rain.

In this embodiment of this application, an optical signal transmission mode of the communication apparatus is selected based on forecasting or real-time monitoring of the weather condition. This helps the control module select a communication link with better performance based on a change of the weather condition, helps reduce impact of different atmospheric turbulence conditions or different weather conditions on performance of the communication apparatus, and helps maintain performance stability of the communication apparatus.

With reference to the first aspect, in some implementations of the first aspect, the communication apparatus further includes an image processing module. The image processing module is configured to capture and recognize the environment image, and transmit the recognition result of the environment image to the control module.

Optionally, the image processing module may be an apparatus including a camera, an image processing chip, a neural network model or an artificial intelligence (artificial intelligence, AI) model that is trained for image recognition, or any other apparatus that can capture and recognize the environment image. This is not specifically limited in this application.

With reference to the first aspect, in some implementations of the first aspect, the communication apparatus further includes a light beam adjustment module. The light beam adjustment module is configured to adjust a path of the optical signal from the optical receiving module according to a control instruction of the control module.

Optionally, the light beam adjustment module may be a component that can change a light path, for example, a fast steering mirror (fast steering mirror, FSM) or a liquid crystal. This is not specifically limited in this application.

With reference to the first aspect, in some implementations of the first aspect, the first optical transmission module includes a multi-mode fiber.

With reference to the first aspect, in some implementations of the first aspect, the second optical transmission module includes a single-mode fiber.

With reference to the first aspect, in some implementations of the first aspect, the communication apparatus further includes a local oscillator and a mixer. The mixer is configured to receive an oscillation signal output by the local oscillator, and perform, based on the oscillation signal, coherent processing on an optical signal output by the single-mode fiber.

It should be understood that an optical signal obtained through coherent processing includes information about the original signal, and strength of background noise and other interference signals is suppressed. This helps extraction of valid information in the optical signal.

In this embodiment of this application, coherent processing is performed on an optical signal received through the single-mode fiber. This helps improve optical coupling efficiency and improve performance of the entire communication apparatus.

With reference to the first aspect, in some implementations of the first aspect, the multi-mode fiber in the first optical transmission module and the single-mode fiber in the second optical transmission module are disposed adjacent to each other.

In this embodiment of this application, the multi-mode fiber and the single-mode fiber are disposed adjacent to each other. This helps reduce rotation amplitude of the light beam adjustment module, helps save power consumption, and helps ensure that effective receiving areas of the multi-mode fiber and the single-mode fiber are within an adjustable range of the light beam adjustment module, thereby helping maintain performance of the communication apparatus.

With reference to the first aspect, in some implementations of the first aspect, the communication apparatus further includes a multi-mode matching module. The multi-mode matching module is configured to couple an optical signal from the first optical transmission module.

Optionally, the multi-mode matching module may be a multi-mode fiber transceiver, an optical multiplexer, an optical matrix converter, or the like. This is not limited in this application.

In some examples, coupling the optical signal from the first optical transmission module may be performed via the multi-mode matching module, so that optical signals in a plurality of modes output from the first optical transmission module can be coupled to a photoelectric detection module as much as possible. This helps increase an amount of optical signals input into the photoelectric conversion module, and helps improve reliability of subsequent signal processing.

With reference to the first aspect, in some implementations of the first aspect, the communication apparatus further includes a photoelectric conversion module. The photoelectric conversion module is configured to convert an optical signal from the first optical transmission module or the second optical transmission module into an electrical signal.

Optionally, the photoelectric conversion module may be a photoelectric detector, a photo detector, or a balanced photo detector, or may be a component that can implement a photoelectric conversion function, for example, a photodiode or a photoresistor. This is not specifically limited in this application.

With reference to the first aspect, in some implementations of the first aspect, the communication apparatus further includes a digital signal processor. The digital signal processor is configured to encode and decode the electrical signal.

In this embodiment of this application, after the photoelectric conversion module converts the optical signal into the electrical signal, if the transmit end encodes the signal, the electrical signal may be decoded and analyzed via the digital signal processor, to restore original information; or if the transmit end does not encode the signal, the electrical signal may be directly analyzed or the electrical signal may be directly transmitted via a network device, to expand an information transmission range. This helps obtain information in the optical signal or implement communication in a wider range.

According to a second aspect, this application provides a communication method, applied to a communication apparatus including an optical receiving module, a first optical transmission module, a second optical transmission module, and a control module. The method includes: receiving an optical signal via the optical receiving module; and when a target parameter meets a first condition, controlling, via the control module, the optical signal from the optical receiving module to be input into the first optical transmission module, and performing multi-mode transmission on the optical signal via the first optical transmission module; or when the target parameter meets a second condition, controlling, via the control module, the optical signal from the optical receiving module to be input into the second optical transmission module, and performing single-mode transmission on the optical signal via the second optical transmission module, where the target parameter includes a parameter related to atmospheric turbulence, and atmospheric turbulence intensity in the first condition is greater than atmospheric turbulence intensity in the second condition.

With reference to the second aspect, in some implementations of the second aspect, the target parameter includes one or more of the following: statistics of angle of arrival fluctuation of a light spot corresponding to the optical signal in a preset time period, environmental precipitation, or an environment image.

With reference to the second aspect, in some implementations of the second aspect, when the target parameter includes the optical power statistics corresponding to the optical signal in the preset time period, the first condition includes that the optical power statistics corresponding to the optical signal in the preset time period conform to a first mathematical distribution, and the second condition includes that the optical power statistics corresponding to the optical signal in the preset time period meet a second mathematical distribution.

With reference to the second aspect, in some implementations of the second aspect, when the target parameter includes the environmental precipitation, the first condition includes that the environmental precipitation is less than or equal to a third threshold, and the second condition includes that the environmental precipitation is greater than or equal to a fourth threshold, where the third threshold is less than or equal to the fourth threshold.

With reference to the second aspect, in some implementations of the second aspect, the communication apparatus further includes a rainfall detection module. The method further includes: measuring the environmental precipitation via the rainfall detection module, and transmitting the environmental precipitation to the control module.

With reference to the second aspect, in some implementations of the second aspect, when the target parameter includes the environment image, the first condition includes that a recognition result of the environment image is sunny, cloudy, or light rain, and the second condition includes that the recognition result of the environment image is heavy rain or torrential rain.

With reference to the second aspect, in some implementations of the second aspect, the communication apparatus further includes an image processing module. The method further includes: capturing and recognizing the environment image via the image processing module, and transmitting the recognition result of the environment image to the control module.

With reference to the second aspect, in some implementations of the second aspect, the communication apparatus further includes a light beam adjustment module. The controlling, via the control module, the optical signal from the optical receiving module to be input into the first optical transmission module includes: controlling, via the control module, the light beam adjustment module to input the optical signal from the optical receiving module into the first optical transmission module. The controlling, via the control module, the optical signal from the optical receiving module to be input into the second optical transmission module includes: controlling, via the control module, the light beam adjustment module to input the optical signal from the optical receiving module into the second optical transmission module.

With reference to the second aspect, in some implementations of the second aspect, the first optical transmission module includes a multi-mode fiber.

With reference to the second aspect, in some implementations of the second aspect, the second optical transmission module includes a single-mode fiber.

With reference to the second aspect, in some implementations of the second aspect, the communication apparatus further includes a local oscillator and a mixer. The method further includes: receiving, via the mixer, an oscillation signal output by the local oscillator, and performing, based on the oscillation signal, coherent processing on an optical signal output by the single-mode fiber.

With reference to the second aspect, in some implementations of the second aspect, the multi-mode fiber in the first optical transmission module and the single-mode fiber in the second optical transmission module are disposed adjacent to each other.

With reference to the second aspect, in some implementations of the second aspect, the communication apparatus further includes a multi-mode matching module. The method further includes: coupling an optical signal from the first optical transmission module via the multi-mode matching module.

With reference to the second aspect, in some implementations of the second aspect, the communication apparatus further includes a photoelectric conversion module. The method further includes: converting an optical signal from the first optical transmission module or the second optical transmission module into an electrical signal via the photoelectric conversion module.

With reference to the second aspect, in some implementations of the second aspect, the communication apparatus further includes a digital signal processor. The method further includes: encoding and decoding the electrical signal via the digital signal processor.

Beneficial effects of the second aspect are similar to those of the first aspect. Details are not described again.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of still another communication system according to an embodiment of this application;
FIG. 4 is a block diagram of a communication apparatus according to an embodiment of this application; and
FIG. 5 is a block diagram of a communication apparatus according to an embodiment of this application.

### DESCRIPTION OF EMBODIMENTS

The following describes technical solutions of this application with reference to accompanying drawings. Before this application is described, the following descriptions are first provided.

First, in embodiments shown below, terms and English abbreviations, for example, reference data or differential data, are examples provided for ease of description, and shall not constitute any limitation on this application. This application does not exclude a possibility of defining, in an existing or a future protocol, another term that can implement a same or similar function.

Second, the first, the second, and various numerical numbers in embodiments shown below are merely distinguished for ease of description, and are not intended to limit the scope of embodiments of this application.

Third, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c, where a, b, and c may be single or plural.

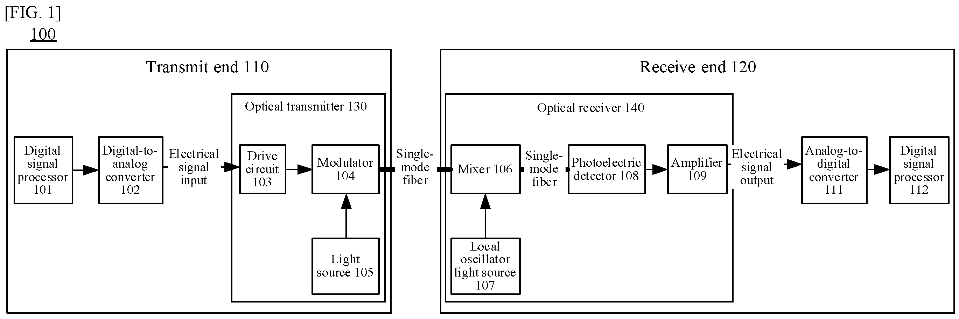

Compared with microwave communication, optical communication, which uses light waves as carriers, has higher security and flexibility, thus attracting extensive research interest. FIG. 1 is an example of a diagram of an optical communication system 100. As shown in FIG. 1, the communication system 100 includes a transmit end 110 and a receive end 120. A digital signal processor 101 of the transmit end 110 transmits a to-be-sent digital signal to a digital-to-analog converter (digital-to-analog converter, DAC) 102. After being converted into an analog electrical signal, the analog electrical signal is transmitted to an optical transmitter 130. Driven by a drive circuit 103 in the optical transmitter 130, the electrical signal is modulated into an optical signal via a modulator 104, and is transmitted to the receive end 120 through a single-mode fiber. At the receive end 120, a mixer 106 and a local oscillator light source 107 in an optical receiver 140 perform interference on the received optical signal, to generate an interfered optical signal. The interfered optical signal is coupled to a single-mode fiber, and is transmitted to a photoelectric detector 108. The interfered optical signal is converted into an electrical signal via the photoelectric detector, and is output by an amplifier 109. After the electrical signal is converted into a digital signal via an analog-to-digital converter (analog-to-digital converter, ADC) 111, the digital signal is processed by a digital signal processor 112 at the receive end and then output. While including information about the original signal, the interfered optical signal suppresses background noise and other interference noise, thereby improving performance of the communication system.

With the development of technologies, free space optical (free space optical, FSO) communication, as a new wireless communication manner, integrates advantages of fiber communication and microwave communication, and has advantages such as a large capacity, grant-free, a small size, and anti-interference, thus attracting extensive attention. However, performance of FSO that uses free space as a propagation medium is affected by the propagation medium. For example, an optical signal passing through an atmospheric channel suffers from an attenuation effect caused by gas molecules and aerosol particles such as clouds and fog in the atmosphere, as well as a scintillation effect caused by atmospheric turbulence. The scintillation effect results in amplitude and phase fluctuation of the optical signal, converting a single-mode optical signal emitted by a transmit end into a multi-mode optical signal. Therefore, in some examples, a receive end receives and transmits an optical signal through a multi-mode fiber.

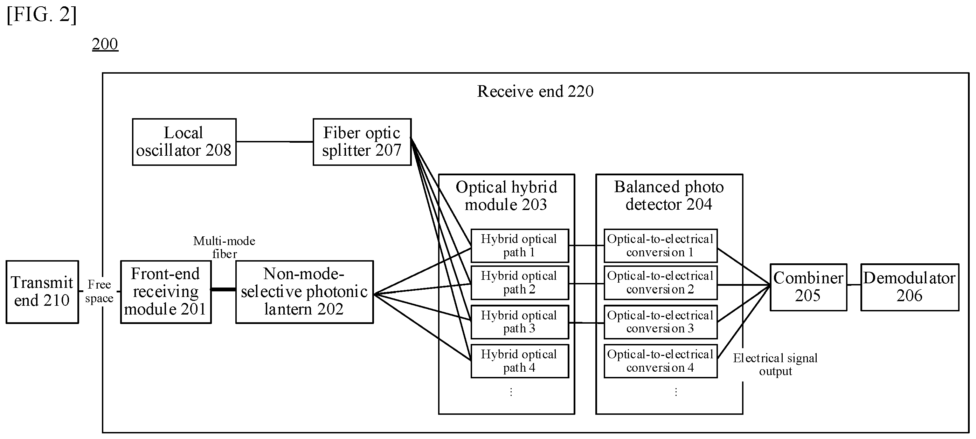

FIG. 2 is an example of a diagram of an FSO communication system 200. As shown in FIG. 2, after an optical signal emitted by a transmit end 210 is received by a front-end receiving module 201 of a receive end 220, the optical signal is transmitted to a non-mode-selective photonic lantern (non-mode-selective photonic lantern, NMSPL) 202 through a multi-mode fiber. After the non-mode-selective photonic lantern 202 converts the multi-mode optical signal into a plurality of single-mode optical signals, the plurality of single-mode optical signals and a plurality of single-mode optical signals output by a fiber optic splitter (fiber optic splitter, FOS) 207 undergo interference (which may also be referred to as coherent processing) via an optical hybrid (Optical hybrid, OH) module 203, and then undergo photoelectric conversion via a balanced photo detector (balanced photo detector, BPD) 204. Subsequently, a plurality of electrical signals are combined via a combiner (combiner) 205 and demodulated via a demodulator (demodulator) 206, and then output. The optical signals used for interference are transmitted to the fiber optic splitter 207 via a local oscillator (local oscillator, LO) 208 for splitting.

In the FSO communication system shown in FIG. 2, an optical signal is received through a multi-mode fiber, and then the multi-mode optical signal is converted into a plurality of single-mode optical signals for coherent processing. In this way, although impact of turbulence on fiber coupling efficiency can be mitigated to some extent, implementation complexity is proportional to a mode count of the optical signal. There are more than hundreds of modes in strong turbulence, which results in excessively high costs and makes it difficult to achieve practical commercial use.

In view of this, this application provides a communication apparatus and a communication method. The communication apparatus includes a first optical transmission module configured to perform multi-mode transmission on an optical signal, and a second optical transmission module configured to perform single-mode transmission on the optical signal. Based on a change of a target parameter related to atmospheric turbulence, when the target parameter meets a first condition, a control module controls the first optical transmission module to perform multi-mode transmission on the optical signal, or when the target parameter meets a second condition, the control module controls the second optical transmission module to perform single-mode transmission on the optical signal. In this way, the communication apparatus may select different transmission modes under different atmospheric turbulence conditions, which helps reduce impact of atmospheric turbulence on receiving of an optical signal and helps maintain performance stability of the communication apparatus.

To make the objectives and technical solutions of this application clearer and more intuitive, the following describes, in detail with reference to the accompanying drawings and embodiments, the communication apparatus and the communication method that are provided in this application. It should be understood that specific embodiments described herein are merely used to explain this application but are not intended to limit this application.

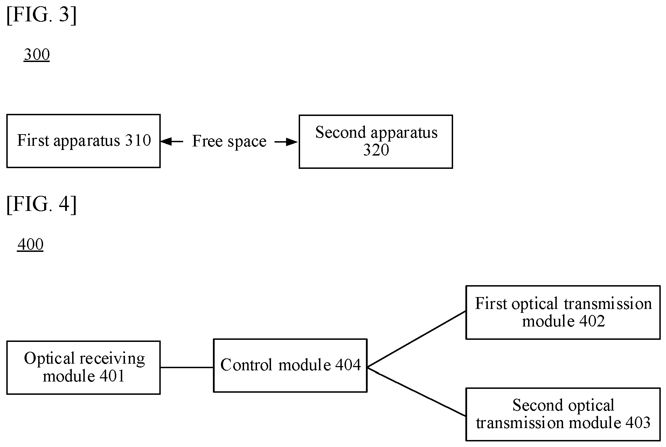

FIG. 3 is a diagram of a communication system 300 to which an embodiment of this application is applicable. As shown in FIG. 3, the communication system 300 includes a first apparatus 310 and a second apparatus 320. In a possible implementation, the communication system is used for optical signal transmission. In some examples, the first apparatus 310 is configured to send an optical signal, and the second apparatus 320 is configured to receive an optical signal. In some other examples, the first apparatus 310 may be configured to receive an optical signal, and the second apparatus 320 may be configured to send an optical signal. This is not limited in this application. It should be understood that a transmit end and a receive end are merely roles of the first apparatus 310 (or the second apparatus 320) in the communication system, and do not constitute a limitation on a function or a structure of the apparatus.

In a possible implementation, the communication system 300 may be an FSO communication system. This is not limited in this application.

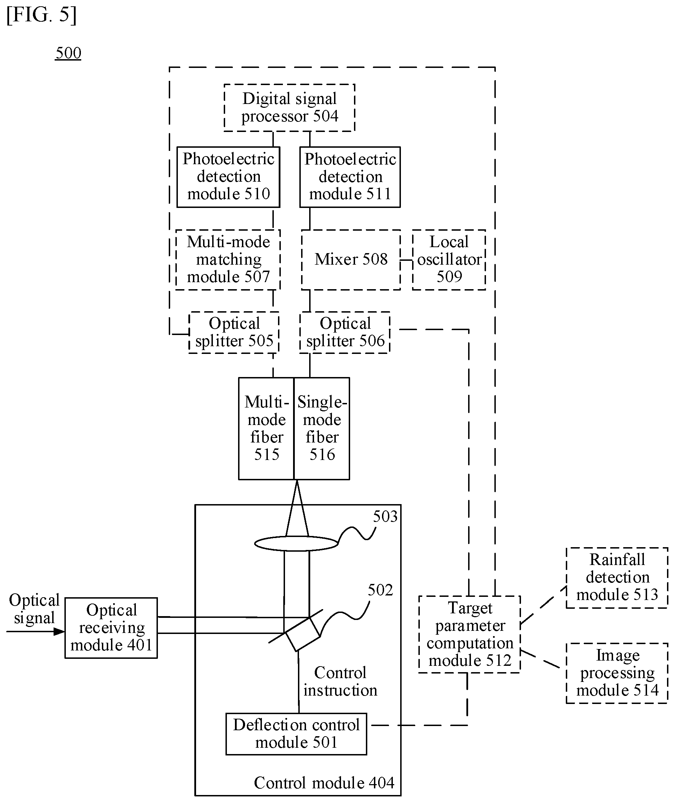

The following describes in detail the communication apparatus provided in embodiments of this application with reference to FIG. 4 and FIG. 5.

FIG. 4 is a block diagram of a communication apparatus 400 according to an embodiment of this application. Optionally, the communication apparatus 400 may be the first apparatus 310 or the second apparatus 320 in the communication system 300, or may be a chip or a chip system included in the first apparatus 310 or the second apparatus 320. This is not limited in this application. In a possible implementation, the communication apparatus 400 may be used as all or some apparatuses at the receive end in the communication system 300, and is configured to receive and process an optical signal from the transmit end. The communication apparatus 400 may alternatively be used in another system. This is not limited in this application.

As shown in FIG. 4, the communication apparatus 400 includes an optical receiving module 401, a first optical transmission module 402, a second optical transmission module 403, and a control module 404.

The optical receiving module 401 is configured to receive an optical signal, and complete receiving and tracking of signal light or beacon light. In a possible implementation, the optical signal received by the optical receiving module 401 may be referred to as an FSO receive signal, and the optical receiving module 401 may also be referred to as an FSO front-end optical path module. However, this is not specifically limited in this application.

The first optical transmission module 402 is configured to perform multi-mode transmission on the optical signal from the optical receiving module 401. The second optical transmission module 403 is configured to perform single-mode transmission on the optical signal from the optical receiving module 401. The control module 404 is configured to control whether the optical signal from the optical receiving module 401 enters the first optical transmission module 402 or the second optical transmission module 403. A control policy of the control module 404 includes: when a target parameter meets a first condition, controlling the optical signal from the optical receiving module 401 to be input into the first optical transmission module 402, or when the target parameter meets a second condition, controlling the optical signal from the optical receiving module 401 to be input into the second optical transmission module 403. The target parameter includes a parameter related to atmospheric turbulence, and atmospheric turbulence intensity in the first condition is greater than atmospheric turbulence intensity in the second condition.

In a possible implementation, the optical signal received by the optical receiving module 401 is transmitted through free space (which may also be referred to as a spatial optical link, an atmospheric channel, or the like), and the free space is affected by atmospheric turbulence and weather conditions, causing interference to optical signal transmission. For example, in a case of sunny, cloudy, or light rain, atmospheric turbulence is strong. Under impact of the atmospheric turbulence, a single-mode optical signal emitted by the transmit end may be converted into a multi-mode optical signal, making it difficult to receive the optical signal. In a case of heavy rain or torrential rain, although atmospheric turbulence is weak and a mode count of the optical signal received by the receive end may be less than that in a case of strong turbulence, rainfall may cause severe attenuation of optical signal power, which poses a challenge to maintenance of a communication link.

In this embodiment of this application, the control module may control, based on a change of the target parameter, the optical signal to enter the first optical transmission module or the second optical transmission module, and the target parameter is the parameter related to atmospheric turbulence. When the target parameter meets the first condition (which may be understood as a strong turbulence condition), the control module controls the optical signal to be input into the first optical transmission module. The first optical transmission module may implement multi-mode transmission of the optical signal, and may transmit optical signals in a plurality of modes. The optical signals in the plurality of modes generated under the strong turbulence condition help improve a rate of receiving the optical signal by the communication apparatus and improve optical coupling efficiency. When the target parameter meets the second condition (which may be understood as a weak turbulence condition), the control module controls the optical signal to be input into the second optical transmission module. The second optical transmission module may implement single-mode transmission of the optical signal. Because sensitivity of a transmission link based on the second optical transmission module is lower than that of a transmission link based on the first transmission module, an optical signal with low power may be received. In a condition of weak turbulence and heavy rainfall (for example, heavy rain or torrential rain), optical signal power is low due to severe link attenuation, and transmitting the optical signal via the second transmission module helps maintain the communication link. In addition, because single-mode transmission has only one mode, which has an anti-interference capability, signal quality can be further maintained, and system performance can be ensured.

According to the method provided in this embodiment of this application, both the first optical transmission module and the second optical transmission module are disposed in the communication apparatus. Because the first optical transmission module and the second optical transmission module have different transmission modes, communication links respectively formed based on the first optical transmission module and the second optical transmission module have different performance and sensitivity. In this way, a communication link with better performance may be selected based on the change of the target parameter in different atmospheric turbulence conditions or different weather conditions. This helps reduce impact of different atmospheric turbulence conditions or different weather conditions on performance of the communication apparatus, and helps maintain performance stability of the communication apparatus.

In a possible implementation, when the target parameter meets the first condition, before or when the control module controls the optical signal to be input into the first optical transmission module, the communication link based on the second optical transmission module may be further disabled. Correspondingly, when the target parameter meets the second condition, before or when the control module controls the optical signal to be input into the second optical transmission module, the communication link based on the first optical transmission module may be further disabled, to reduce system energy consumption. However, this is not limited in this application.

In an optional embodiment, the communication apparatus further includes a photoelectric conversion module. The photoelectric conversion module is configured to convert an optical signal from the first optical transmission module or the second optical transmission module into an electrical signal.

In an optional embodiment, the communication apparatus further includes a digital signal processor. The digital signal processor is configured to encode and decode the electrical signal.

Optionally, the photoelectric conversion module may be a photoelectric detector, a photo detector, or a balanced photo detector, or may be a component that can implement a photoelectric conversion function, for example, a photodiode or a photoresistor. This is not specifically limited in this application.

In this embodiment of this application, after the photoelectric conversion module converts the optical signal into the electrical signal, if the transmit end encodes the signal, the electrical signal may be decoded and analyzed via the digital signal processor, to restore original information; or if the transmit end does not encode the signal, the electrical signal may be directly analyzed or the electrical signal may be directly transmitted via a network device, to expand an information transmission range. This helps obtain information in the optical signal or implement communication in a wider range.

In an optional embodiment, the communication apparatus further includes a multi-mode matching module. The multi-mode matching module is configured to couple an optical signal from the first optical transmission module.

Optionally, the multi-mode matching module may be a multi-mode fiber transceiver, an optical multiplexer, an optical matrix converter, or the like. This is not limited in this application.

In some examples, coupling the optical signal from the first optical transmission module may be performed via the multi-mode matching module, so that optical signals in a plurality of modes output from the first optical transmission module can be coupled to a photoelectric detection module as much as possible. This helps increase an amount of optical signals input into the photoelectric conversion module, and helps improve reliability of subsequent signal processing.

In an optional embodiment, the first optical transmission module includes a multi-mode fiber, and the second optical transmission module includes a single-mode fiber.

In a possible implementation, the communication apparatus 400 further includes a local oscillator and a mixer. The mixer is configured to receive an oscillation signal output by the local oscillator, and perform, based on the oscillation signal, coherent processing on an optical signal output by the single-mode fiber.

It should be understood that an optical signal obtained through coherent processing includes information about the original signal, and strength of background noise and other interference signals is suppressed. This helps extraction of valid information in the optical signal.

In some examples, a transmission link that is based on single-mode fiber transmission and on which coherent processing is performed may be referred to as a coherent link, a coherent system, a single-mode coherent link, a single-mode coherent system, or the like, and a link based on multi-mode transmission may be referred to as a non-coherent link, a non-coherent system, a multi-mode non-coherent link, a multi-mode non-coherent system, or the like. This is not specifically limited in this application.

In this embodiment of this application, coherent processing is performed on an optical signal received through the single-mode fiber. This helps improve optical coupling efficiency and improve performance of the entire communication apparatus.

In an optional embodiment, the target parameter may include one or more of the following: optical power statistics corresponding to the optical signal in a preset time period, environmental precipitation, or an environment image.

It should be understood that the optical power statistics corresponding to the optical signal in the preset time period, the environmental precipitation, or the environment image may be understood as different parameters for describing atmospheric turbulence intensity. These parameters may be independently used to evaluate the atmospheric turbulence intensity, or one or more of these parameters may be combined for evaluation. This is not limited in this application.

In an optional embodiment, when the target parameter includes the optical power statistics corresponding to the optical signal in the preset time period, the first condition includes that the optical power statistics corresponding to the optical signal in the preset time period conform to a first mathematical distribution, and the second condition includes that the optical power statistics corresponding to the optical signal in the preset time period meet a second mathematical distribution.

In a possible implementation, the communication apparatus 400 may further include an optical splitter. The optical signal output from the first optical transmission module or the second optical transmission module passes through the optical splitter, and one or more optical signals are input into the control module. The control module computes the optical power statistics corresponding to the optical signal in the preset time period, and when the optical power statistics corresponding to the optical signal in the preset time period conform to the first mathematical distribution, controls the optical signal from the optical receiving module to be input into the first optical transmission module for multi-mode transmission, or when the optical power statistics corresponding to the optical signal in the preset time period meet the second mathematical distribution, controls the optical signal from the optical receiving module to be input into the second optical transmission module for single-mode transmission.

Optionally, the preset time period may be 1 second, 1 millisecond, or any other time period. This is not limited in this application.

Optionally, the mathematical distribution may be a light intensity fluctuation probability density function like a Gamma (Gamma-Gamma) distribution or a lognormal distribution, or any other statistical model that can reflect atmospheric turbulence intensity. This is not specifically limited in this application.

In a possible implementation, the control module may compute, based on the optical signal output from the optical splitter and the optical power statistics corresponding to the optical signal in the preset time period, a probability density function (probability density function, PDF) of the optical signal, compare the obtained PDF with Gamma-Gamma distributions under different turbulence parameters (Cn²), and find a first turbulence parameter that matches the PDF. In this case, it may be considered that the optical power statistics corresponding to the optical signal in the preset time period meet a Gamma-Gamma distribution corresponding to the first turbulence parameter.

For example, the first mathematical distribution may be a Gamma-Gamma distribution corresponding to a case in which Cn² is greater than or equal to 1e⁻¹³, or may be understood as that the first mathematical distribution reflects a mathematical distribution in strong turbulence. The second mathematical distribution may be a Gamma-Gamma distribution corresponding to a case in which Cn² is less than or equal to 1e⁻¹⁵, or may be understood as that the second mathematical score is a mathematical distribution in weak turbulence.

Optionally, the method for comparing the PDF and the Cn² may include but is not limited to a method like machine learning. Program code corresponding to the comparison method may be preset in the control module. This is not limited in this application.

In this embodiment of this application, the optical power statistics corresponding to the optical signal in the preset time period are computed, so that the control module can control, when the optical power statistics corresponding to the optical signal in the preset time period conform to the first mathematical distribution, the optical signal from the optical receiving module to be input into the first optical transmission module for multi-mode transmission, or control, when the optical power statistics corresponding to the optical signal in the preset time period meet the second mathematical distribution, the optical signal from the optical receiving module to be input into the second optical transmission module for single-mode transmission. In this way, the communication apparatus provided in this embodiment of this application can select different transmission modes in different turbulence conditions. This helps maintain performance stability of the communication apparatus.

In another possible implementation, the control module may compute, based on the optical signal output from the optical splitter, average optical power (which may also be understood as receive power) of the optical signal in the preset time period. On one hand, an instantaneous value (for example, millisecond-level power) of the receive power may be used to determine power fluctuation, and turbulence intensity may be determined based on the power fluctuation. On the other hand, a relationship in which a link margin is equal to a difference between the receive power and link sensitivity may be used to determine whether a link is available.

For example, a transmission distance between the transmit end and the receive end of the optical signal being 3 km, transmit power of the optical signal being 30 dBm, sensitivity of a coherent link based on single-mode fiber transmission being -50 dBm, sensitivity of a non-coherent link based on multi-mode fiber transmission being -30 dBm, a strong turbulence scenario (for example, Cn² is greater than or equal to 1e⁻¹³), and a weak turbulence scenario (for example, Cn² is less than or equal to 1e⁻¹⁵) are used for describing selection of the transmission mode by the control module based on the average optical power of the optical signal in the preset time period.

In the strong turbulence scenario, for receive power, a link margin, and power fluctuation of the non-coherent link based on multi-mode fiber transmission, some possible parameters determined by the control module include: the receive power=30 dBm (transmit power)-36 dBm (geometric loss and coupling loss caused by turbulence)=-6 dBm, the link margin=-6 dBm (receive power)-(-30 dBm (receive sensitivity))=24 dBm, and the power fluctuation caused by the turbulence being about 30 dB. For receive power, a link margin, and power fluctuation of the coherent link based on single-mode fiber transmission, some possible parameters determined by the control module include: the receive power=30 dBm (transmit power)-60 dBm (geometric loss and coupling loss caused by turbulence)=-30 dBm, the link margin=-30 dBm (receive power)-(-50 dBm (receive sensitivity))=20 dBm, and the power fluctuation caused by the turbulence being about 50 dB, which exceeds a processing capability of adaptive optical attenuation, and may cause bit errors. It can be learned that, in this case, the non-coherent link based on multi-mode fiber transmission has better performance.

In the weak turbulence scenario, for receive power, a link margin, and power fluctuation of the coherent link based on single-mode fiber transmission, some possible parameters determined by the control module include: the receive power=30 dBm (transmit power)-60 dBm (power attenuation caused by heavy rain or torrential rain)-10 dBm (geometric loss and coupling loss caused by turbulence)=-40 dBm, where the receive power (-40 dBm) is less than the sensitivity of the non-coherent link (-30 dBm), so that the non-coherent link is disconnected. For receive power, a link margin, and power fluctuation of the coherent link based on single-mode fiber transmission, some possible parameters determined by the control module include: the receive power=30 dBm (transmit power)-60 dBm (power attenuation caused by heavy rain or torrential rain)-15 dBm (geometric loss and coupling loss caused by turbulence)=-45 dBm, where the receive power (-45 dBm) is still greater than the link sensitivity of the coherent link (-50 dBm), so that the coherent link can still function normally in communication. It can be learned that, in this case, because the coherent link has lower sensitivity than the non-coherent link, the coherent link based on single-mode fiber transmission has better performance in the weak turbulence scenario.

It should be understood that the foregoing descriptions of values of the optical signal parameters are merely examples, and do not constitute a specific limitation on this application.

In this embodiment of this application, the average optical power of the optical signal in the preset time period is computed, so that the control module can use the instantaneous value (for example, the millisecond-level power) of the receive power to determine the power fluctuation, and determine the turbulence intensity based on the power fluctuation; or use a relationship in which a link margin is equal to a difference between link sensitivity and the receive power to determine whether a link is available, and select the transmission mode of the optical signal based on the link margin and the power fluctuation of the non-coherent link based on multi-mode fiber transmission and the link margin and the power fluctuation of the coherent link based on single-mode fiber transmission. In this way, the communication apparatus provided in this embodiment of this application can select different transmission modes in different turbulence conditions, to help maintain performance stability of the communication apparatus.

In an optional embodiment, when the target parameter includes the environmental precipitation, the first condition includes that the environmental precipitation is less than or equal to a third threshold, and the second condition includes that the environmental precipitation is greater than or equal to a fourth threshold, where the third threshold is less than or equal to the fourth threshold.

In a possible implementation, the communication apparatus further includes a rainfall detection module. The rainfall detection module is configured to measure the environmental precipitation and transmit the environmental precipitation to the control module. The control module controls, when determining that the environmental precipitation is less than or equal to the third threshold, the optical signal from the optical receiving module to be input into the first optical transmission module, or controls, when determining that the environmental precipitation is greater than or equal to the fourth threshold, the optical signal from the optical receiving module to be input into the second optical transmission module.

It should be understood that the atmospheric turbulence is related to thermal effects caused by air density differences and temperature variations. Therefore, the atmospheric turbulence intensity is closely related to weather conditions. For example, when the environmental precipitation is less than or equal to the third threshold, the environment may be considered as a strong turbulence environment; and when the environmental precipitation is greater than or equal to the fourth threshold, the environment may be considered as a weak turbulence environment. However, this is not limited in this application. Optionally, the third threshold may be 10 millimeters per day, and the fourth threshold may be 50 millimeters per hour. However, this is not specifically limited in this application.

Optionally, the rainfall detection module may be any device or component that can measure the environmental precipitation, for example, a rain gauge, a rain meter, or a sensor configured to measure a rainfall amount. This is not specifically limited in this application.

In this embodiment of this application, the environmental precipitation is used as the target parameter, so that the control module can control, when determining that the environmental precipitation is less than or equal to the third threshold, the optical signal from the optical receiving module to be input into the first optical transmission module, or control, when determining that the environmental precipitation is greater than or equal to the fourth threshold, the optical signal from the optical receiving module to be input into the second optical transmission module. Because the atmospheric turbulence intensity is closely related to the weather conditions, in the method provided in this application, on one hand, the communication apparatus can select different transmission modes in different turbulence conditions, which helps maintain performance stability of the communication apparatus; and on the other hand, the manner of measuring the environmental precipitation via a rainfall detection module is convenient and direct, which helps improve efficiency of the control module and further improve performance of a communication system.

In an optional embodiment, when the target parameter includes the environment image, the first condition includes that a recognition result of the environment image is sunny, cloudy, or light rain, and the second condition includes that the recognition result of the environment image is heavy rain or torrential rain.

In a possible implementation, the communication apparatus further includes an image processing module. The image processing module is configured to capture and recognize the environment image, and transmit the recognition result of the environment image to the control module. For example, the control module may control, when the recognition result of the environment image is sunny, cloudy, or light rain, the optical signal from the optical receiving module to be input into the first optical transmission module, or may control, when the recognition result of the environment image is heavy rain or torrential rain, the optical signal from the optical receiving module to be input into the second optical transmission module.

Optionally, the image processing module may be an apparatus including a camera, an image processing chip, a neural network model or an artificial intelligence (artificial intelligence, AI) model that is trained for image recognition, or any other apparatus that can capture and recognize the environment image. This is not specifically limited in this application.

In another possible implementation, the communication apparatus may further include a network communication module. The network communication module may obtain meteorological data from any open online meteorological platform, and send a weather condition corresponding to the meteorological data to the control module. The control module may control, when the weather condition is sunny, cloudy, or light rain, the optical signal from the optical receiving module to be input into the first optical transmission module, or may control, when the weather condition is heavy rain or torrential rain, the optical signal from the optical receiving module to be input into the second optical transmission module. A manner in which the control module obtains weather condition information is not specifically limited in this application.

In this embodiment of this application, an optical signal transmission mode of the communication apparatus is selected based on forecasting or real-time monitoring of the weather condition. This helps the control module select a communication link with better performance based on a change of the weather condition, helps reduce impact of different atmospheric turbulence conditions or different weather conditions on performance of the communication apparatus, and helps maintain performance stability of the communication apparatus.

The following uses a communication apparatus 500 shown in FIG. 5 as an example to describe in detail a structure of the communication apparatus provided in this embodiment of this application. The communication apparatus 500 is described by using an example in which a first optical transmission module is a multi-mode fiber and a second optical transmission module is a single-mode fiber.

As shown in FIG. 5, the communication apparatus 500 includes an optical receiving module 401, a control module 404, a multi-mode fiber 515, a single-mode fiber 516, an optical splitter 505, an optical splitter 506, a multi-mode matching module 507, a mixer 508, a local oscillator 509, a photoelectric detection module 510, a photoelectric detection module 511, a digital signal processor 504, a target parameter computation module 512, a rainfall detection module 513, an image processing module 514, and the like.

Optionally, the control module 404 may include a deflection control module 501, a light beam adjustment module 502, and a lens 503. However, this is not limited in this application. In a possible implementation, the deflection control module 501 outputs a control instruction to the light beam adjustment module 502, and controls the light beam adjustment module to adjust a path of an optical signal from the optical receiving module 401, so that the optical signal is refracted by the lens 503 and then enters the multi-mode fiber 515 or the single-mode fiber 516.

In a possible implementation, the light beam adjustment module 502 includes a motor, and the control instruction output by the deflection control module 501 to the light beam adjustment module 502 may be an instruction related to an angle of the motor. However, this is not limited in this application.

Optionally, the deflection control module 501 may be a nutation controller, a liquid crystal controller, or the like, and the light beam adjustment module 502 may be a component that can change a light path, for example, a fast steering mirror (fast steering mirror, FSM) or a liquid crystal. This is not specifically limited in this application.

In a possible implementation, the target parameter computation module 512 may be configured to perform computation or recognition on the foregoing parameters such as the optical power statistics corresponding to the optical signal in the preset time period, the environmental precipitation, the environment image, the receive power, the link margin, and the power fluctuation. Optionally, a function of the target parameter computation module 512 may be implemented by the deflection control module 501, or the target parameter computation module 512 may be integrated into the deflection control module 501, or the target parameter computation module 512 may be integrated into the control module 404 and cooperate with the deflection control module 501 to control the path of the optical signal.

In a possible implementation, the communication apparatus 500 may not include the rainfall detection module 513 and the image processing module 514. In this case, the communication apparatus 500 may compute, via the target parameter computation module 512 for a light beam output by the optical splitter 505 and/or 506, optical power statistics corresponding to an optical signal in a preset time period, so that the control module 404 controls, when the optical power statistics corresponding to the optical signal in the preset time period conform to a first mathematical distribution, the optical signal from the optical receiving module to be input into the multi-mode fiber 515, or controls, when the optical power statistics corresponding to the optical signal in the preset time period meet a second mathematical distribution, the optical signal from the optical receiving module to be input into the single-mode fiber 516.

In another possible implementation, the communication apparatus 500 may not include the optical splitter 505, the optical splitter 506, and the image processing module 514. In this case, the communication apparatus 500 may compute, via the target parameter computation module 512, environmental precipitation output by the rainfall detection module 513, so that the control module 404 controls, when the environmental precipitation is less than or equal to a third threshold, the optical signal from the optical receiving module to be input into the multi-mode fiber 515, or controls, when the environmental precipitation is greater than or equal to a fourth threshold, the optical signal from the optical receiving module to be input into the single-mode fiber 516.

In still another possible implementation, the communication apparatus 500 may not include the optical splitter 505, the optical splitter 506, and the rainfall detection module 513. In this case, the communication apparatus 500 may collect, via the target parameter computation module 512, statistics on a recognition result (for example, a probability that a recognition result appears in a preset time period) output by the image processing module 514, so that the control module 404 controls, when the recognition result is sunny, cloudy, or light rain, or a probability that the recognition result is sunny, cloudy, or light rain in a time period is greater than a preset threshold, the optical signal from the optical receiving module to be input into the multi-mode fiber 515, or controls, when the recognition result is heavy rain or torrential rain, or a probability that the recognition result is heavy rain or torrential rain in a time period is greater than a preset threshold, the optical signal from the optical receiving module to be input into the single-mode fiber 516.

In yet still another possible implementation, the communication apparatus 500 may include the optical splitter 505, the optical splitter 506, the rainfall detection module 513, and the image processing module 514. The control module 404 may compute, via the target parameter computation module 512 for a light beam output by the optical splitter 505 and/or 506, one or more of optical power statistics corresponding to an optical signal in a preset time period, environmental precipitation output by the rainfall detection module 513, and a recognition result output by the image processing module 514, to select a transmission path of the optical signal. Optionally, the target parameter computation module 512 may select one of the foregoing three target parameters for computation, or may perform joint computation on the three target parameters. This is not specifically limited in this application.

In an optional embodiment, the multi-mode fiber and the single-mode fiber may be disposed adjacent to each other. This helps reduce rotation amplitude of the light beam adjustment module, helps save power consumption, and helps ensure that effective receiving areas of the multi-mode fiber and the single-mode fiber are within an adjustable range of the light beam adjustment module, thereby helping maintain performance of the communication apparatus.

The following describes a communication method provided in this application.

The communication method provided in embodiments of this application may be performed by a communication apparatus including an optical receiving module, a first optical transmission module, a second optical transmission module, and a control module. Optionally, the communication apparatus may be the communication apparatus 400 or the communication apparatus 500. The communication apparatus is applicable to the communication system 300. This is not limited in this application.

The communication method includes:
Step 1: Receive an optical signal via the optical receiving module.
Step 2: When a target parameter meets a first condition, control, via the control module, the optical signal from the optical receiving module to be input into the first optical transmission module, and perform multi-mode transmission on the optical signal via the first optical transmission module; or when the target parameter meets a second condition, control, via the control module, the optical signal from the optical receiving module to be input into the second optical transmission module, and perform single-mode transmission on the optical signal via the second optical transmission module, where the target parameter includes a parameter related to atmospheric turbulence, and atmospheric turbulence intensity in the first condition is greater than atmospheric turbulence intensity in the second condition.

In a possible implementation, the target parameter includes one or more of the following: statistics of angle of arrival fluctuation of a light spot corresponding to the optical signal in a preset time period, environmental precipitation, or an environment image.

In a possible implementation, when the target parameter includes the optical power statistics corresponding to the optical signal in the preset time period, the first condition includes that the optical power statistics corresponding to the optical signal in the preset time period conform to a first mathematical distribution, and the second condition includes that the optical power statistics corresponding to the optical signal in the preset time period meet a second mathematical distribution.

In a possible implementation, when the target parameter includes the environmental precipitation, the first condition includes that the environmental precipitation is less than or equal to a third threshold, and the second condition includes that the environmental precipitation is greater than or equal to a fourth threshold, where the third threshold is less than or equal to the fourth threshold.

In a possible implementation, the communication apparatus further includes a rainfall detection module. The method further includes: measuring the environmental precipitation via the rainfall detection module, and transmitting the environmental precipitation to the control module.

In a possible implementation, when the target parameter includes the environment image, the first condition includes that a recognition result of the environment image is sunny, cloudy, or light rain, and the second condition includes that the recognition result of the environment image is heavy rain or torrential rain.

In a possible implementation, the communication apparatus further includes an image processing module. The method further includes: capturing and recognizing the environment image via the image processing module, and transmitting the recognition result of the environment image to the control module.

In a possible implementation, the communication apparatus further includes a light beam adjustment module. The controlling, via the control module, the optical signal from the optical receiving module to be input into the first optical transmission module includes: controlling, via the control module, the light beam adjustment module to input the optical signal from the optical receiving module into the first optical transmission module. The controlling, via the control module, the optical signal from the optical receiving module to be input into the second optical transmission module includes: controlling, via the control module, the light beam adjustment module to input the optical signal from the optical receiving module into the second optical transmission module.

In a possible implementation, the first optical transmission module includes a multi-mode fiber.

In a possible implementation, the second optical transmission module includes a single-mode fiber.

In a possible implementation, the communication apparatus further includes a local oscillator and a mixer. The method further includes: receiving, via the mixer, an oscillation signal output by the local oscillator, and performing, based on the oscillation signal, coherent processing on an optical signal output by the single-mode fiber.

In a possible implementation, the multi-mode fiber in the first optical transmission module and the single-mode fiber in the second optical transmission module are disposed adjacent to each other.

In a possible implementation, the communication apparatus further includes a multi-mode matching module. The method further includes: coupling an optical signal from the first optical transmission module via the multi-mode matching module.

In a possible implementation, the communication apparatus further includes a photoelectric conversion module. The method further includes: converting an optical signal from the first optical transmission module or the second optical transmission module into an electrical signal via the photoelectric conversion module.

In a possible implementation, the communication apparatus further includes a digital signal processor. The method further includes: encoding and decoding the electrical signal via the digital signal processor.

Beneficial effects of the communication method provided in embodiments of this application are similar to beneficial effects of the foregoing communication apparatus. Details are not described herein again.

This application further provides a communication system, including the communication apparatus provided in this application as a receive end, and the communication apparatus provided in this application or another communication apparatus as a transmit end, to implement the communication method provided in embodiments of this application.

In this specification, claims, and accompanying drawings of embodiments of this application, the terms "first", "second", "third", and the like are intended to distinguish between similar objects but do not necessarily indicate a specific order or sequence. It should be understood that data used in such a way is interchangeable in proper circumstances, so that embodiments of this application described herein can be implemented in an order other than the order illustrated or described herein. In addition, the terms "may include", "have", and variants thereof are intended to cover non-exclusive inclusion. For example, a process, method, system, product, or device that includes a series of steps or units is not necessarily limited to those clearly listed steps or units, but may include other steps or units that are not clearly listed or are inherent to such a process, method, product, or device.

The foregoing embodiments are merely used to describe the technical solutions in embodiments of this application, but not to limit the technical solutions. Although embodiments of this application are described in detail with reference to the foregoing embodiments, a person of ordinary skill in the art should understand that modifications may still be made to the technical solutions recorded in the foregoing embodiments or equivalent replacements may be made to some or all technical features thereof, and such modifications or replacements do not cause the essence of the corresponding technical solutions to depart from the scope of the technical solutions in embodiments of this application.

## Claims

1. A communication apparatus, wherein the communication apparatus comprises an optical receiving module, a first optical transmission module, a second optical transmission module, and a control module, wherein
the optical receiving module is configured to receive an optical signal, the first optical transmission module is configured to perform multi-mode transmission on the optical signal from the optical receiving module, and the second optical transmission module is configured to perform single-mode transmission on the optical signal from the optical receiving module; and
the control module is configured to: when a target parameter meets a first condition, control the optical signal from the optical receiving module to be input into the first optical transmission module, or when the target parameter meets a second condition, control the optical signal from the optical receiving module to be input into the second optical transmission module, wherein the target parameter comprises a parameter related to atmospheric turbulence, and atmospheric turbulence intensity in the first condition is greater than atmospheric turbulence intensity in the second condition.

2. The communication apparatus according to claim 1, wherein the target parameter comprises one or more of the following:
optical power statistics corresponding to the optical signal in a preset time period;
environmental precipitation; or
an environment image.

3. The communication apparatus according to claim 2, wherein when the target parameter comprises the optical power statistics corresponding to the optical signal in the preset time period, the first condition comprises that the optical power statistics corresponding to the optical signal in the preset time period conform to a first mathematical distribution, and the second condition comprises that the optical power statistics corresponding to the optical signal in the preset time period meet a second mathematical distribution.

4. The communication apparatus according to claim 2 or 3, wherein when the target parameter comprises the environmental precipitation, the first condition comprises that the environmental precipitation is less than or equal to a third threshold, and the second condition comprises that the environmental precipitation is greater than or equal to a fourth threshold, wherein the third threshold is less than or equal to the fourth threshold.

5. The communication apparatus according to claim 4, wherein the communication apparatus further comprises a rainfall detection module, and the rainfall detection module is configured to measure the environmental precipitation and transmit the environmental precipitation to the control module.

6. The communication apparatus according to any one of claims 2 to 5, wherein when the target parameter comprises the environment image, the first condition comprises that a recognition result of the environment image is sunny, cloudy, or light rain, and the second condition comprises that the recognition result of the environment image is heavy rain or torrential rain.

7. The communication apparatus according to claim 6, wherein the communication apparatus further comprises an image processing module, and the image processing module is configured to capture and recognize the environment image, and transmit the recognition result of the environment image to the control module.

8. The communication apparatus according to any one of claims 1 to 7, wherein the communication apparatus further comprises a light beam adjustment module, and the light beam adjustment module is configured to adjust a path of the optical signal from the optical receiving module according to a control instruction of the control module.

9. The communication apparatus according to any one of claims 1 to 8, wherein the first optical transmission module comprises a multi-mode fiber.

10. The communication apparatus according to any one of claims 1 to 9, wherein the second optical transmission module comprises a single-mode fiber.

11. The communication apparatus according to claim 10, wherein the communication apparatus further comprises a local oscillator and a mixer, and the mixer is configured to receive an oscillation signal output by the local oscillator, and perform, based on the oscillation signal, coherent processing on an optical signal output by the single-mode fiber.

12. The communication apparatus according to any one of claims 1 to 11, wherein the multi-mode fiber in the first optical transmission module and the single-mode fiber in the second optical transmission module are disposed adjacent to each other.

13. The communication apparatus according to any one of claims 1 to 12, wherein the communication apparatus further comprises a multi-mode matching module, and the multi-mode matching module is configured to couple an optical signal from the first optical transmission module.

14. The communication apparatus according to any one of claims 1 to 13, wherein the communication apparatus further comprises a photoelectric conversion module, and the photoelectric conversion module is configured to convert an optical signal from the first optical transmission module or the second optical transmission module into an electrical signal.

15. The communication apparatus according to claim 14, wherein the communication apparatus further comprises a digital signal processor, and the digital signal processor is configured to encode and decode the electrical signal.

16. A communication method, applied to a communication apparatus comprising an optical receiving module, a first optical transmission module, a second optical transmission module, and a control module, wherein the method comprises:
receiving an optical signal via the optical receiving module; and
when a target parameter meets a first condition, controlling, via the control module, the optical signal from the optical receiving module to be input into the first optical transmission module, and performing multi-mode transmission on the optical signal via the first optical transmission module; or
when the target parameter meets a second condition, controlling, via the control module, the optical signal from the optical receiving module to be input into the second optical transmission module, and performing single-mode transmission on the optical signal via the second optical transmission module, wherein the target parameter comprises a parameter related to atmospheric turbulence, and
atmospheric turbulence intensity in the first condition is greater than atmospheric turbulence intensity in the second condition.

17. The method according to claim 16, wherein the target parameter comprises one or more of the following:
statistics of angle of arrival fluctuation of a light spot corresponding to the optical signal in a preset time period;
environmental precipitation; or
an environment image.

18. The method according to claim 17, wherein when the target parameter comprises the optical power statistics corresponding to the optical signal in the preset time period, the first condition comprises that the optical power statistics corresponding to the optical signal in the preset time period conform to a first mathematical distribution, and the second condition comprises that the optical power statistics corresponding to the optical signal in the preset time period meet a second mathematical distribution.

19. The method according to claim 17 or 18, wherein when the target parameter comprises the environmental precipitation, the first condition comprises that the environmental precipitation is less than or equal to a third threshold, and the second condition comprises that the environmental precipitation is greater than or equal to a fourth threshold, wherein the third threshold is less than or equal to the fourth threshold.

20. The method according to claim 19, wherein the communication apparatus further comprises a rainfall detection module, and the method further comprises: measuring, via the rainfall detection module, the environmental precipitation, and transmitting the environmental precipitation to the control module.

21. The method according to any one of claims 17 to 20, wherein when the target parameter comprises the environment image, the first condition comprises that a recognition result of the environment image is sunny, cloudy, or light rain, and the second condition comprises that the recognition result of the environment image is heavy rain or torrential rain.

22. The method according to claim 21, wherein the communication apparatus further comprises an image processing module, and the method further comprises:
capturing and recognizing, via the image processing module, the environment image, and transmitting the recognition result of the environment image to the control module.

23. The method according to any one of claims 17 to 22, wherein the communication apparatus further comprises a light beam adjustment module, and the controlling, via the control module, the optical signal from the optical receiving module to be input into the first optical transmission module comprises:
controlling, via the control module, the light beam adjustment module to input the optical signal from the optical receiving module into the first optical transmission module; and
the controlling, via the control module, the optical signal from the optical receiving module to be input into the second optical transmission module comprises:
controlling, via the control module, the light beam adjustment module to input the optical signal from the optical receiving module into the second optical transmission module.

24. The method according to any one of claims 16 to 23, wherein the first optical transmission module comprises a multi-mode fiber.

25. The method according to any one of claims 16 to 24, wherein the second optical transmission module comprises a single-mode fiber.

26. The method according to claim 25, wherein the communication apparatus further comprises a local oscillator and a mixer, and the method further comprises: receiving, via the mixer, an oscillation signal output by the local oscillator, and performing, based on the oscillation signal, coherent processing on an optical signal output by the single-mode fiber.

27. The method according to any one of claims 16 to 26, wherein the multi-mode fiber in the first optical transmission module and the single-mode fiber in the second optical transmission module are disposed adjacent to each other.

28. The method according to any one of claims 16 to 27, wherein the communication apparatus further comprises a multi-mode matching module, and the method further comprises:
coupling an optical signal from the first optical transmission module via the multi-mode matching module.

29. The method according to any one of claims 16 to 28, wherein the communication apparatus further comprises a photoelectric conversion module, and the method further comprises:
converting an optical signal from the first optical transmission module or the second optical transmission module into an electrical signal via the photoelectric conversion module.

30. The method according to claim 29, wherein the communication apparatus further comprises a digital signal processor, and the method further comprises: encoding and decoding the electrical signal via the digital signal processor.
